# EUROPÄISCHE PATENTSCHRIFT

(11) **EP 1 568 602 B1**
(45) Veröffentlichungstag und Bekanntmachung des Hinweises auf die Patenterteilung: **11.04.2007**
(21) Anmeldenummer: 04004172.5
(22) Anmeldetag: 24.02.2004
(51) Int. Cl.: B63H 9/02, F03D 3/00

(54) **Zusatzantriebsanlage durch Umlenkung des Fluidstroms**
Auxiliary propulsion unit using the deviation of a fluid stream
Dispositif de propulsion auxiliaire par la déviation du courant de fluide

(43) Veröffentlichungstag der Anmeldung: 31.08.2005
(73) Patentinhaber: WOLFGANG JOBMANN GMBH, 22587 Hamburg (DE)
(72) Erfinder: Jobmann, Wolfgang, 22587 Hamburg (DE); Stamme, Peter, 22609 Hamburg (DE)
(74) Vertreter: Leonhard, Frank Reimund

(56) Entgegenhaltungen:
- GB-A- 371 691
- GB-A- 494 093
- GB-A- 2 102 755
- GB-A- 2 179 014
- GB-A- 2 256 410

## Beschreibung

Die Erfindung betrifft eine neue Verwendung einer auf der Grundlage des Magnus-Effekts arbeitende Antriebsanlage zu Zwecken eines Zusatzantriebs zu einem bestehenden Vortrieb.

Es sind Windzusatzantriebsanlagen bekannt, welche auf dem Magnus-Effekt (Magnus, 1852) basieren, die hierzu weiteren physikalischen Grundlagen (Prantl, 1904) nutzen und in der Entwicklung des Flettner-Rotors (Flettner, 1922) ihre erste Realisierung erfuhren, vgl. auch **GB-A 2 102 755** (Blohm & Voss) mit einem "Flettner-Rotor" für Schiffsantriebe.

Praktische Umsetzung erfuhr der Flettner-Rotor auf der Grundlage von Versuchen der AVA, Göttingen (1922-1924) durch die Germania-Werft mit dem Umbau des Segelschiffes "Buckau" (1924) und der RMS "Barbara" (1926).

Bei diesen Wind-Zusatzantriebsanlagen wird ein angetriebener, rotierender Kreiszylinder (Rotor) direkt vom Wind und Fahrtwind angeströmt; durch den Magnus-Effekt wird ein nicht unerheblicher Vortrieb erzeugt.

Ein Nachteil dieser Zusatzantriebsanlagen ist, dass sie nur bei bestimmten Windrichtungen (bis zu 2 Strich in Fahrtrichtung) einen Vortrieb erzeugen können.

Aus diesem Grund sind diese bekannten Zusatzantriebsanlagen für Fahrzeuge, welche sich relativ schnell bewegen, nicht einsetzbar, da bedingt durch den starken Fahrtwind die Gesamt-Windanströmung von im wesentlichen vorne erfolgt und somit außerhalb des Wirkungsbereiches liegt.

Die Angabe der Erfindung ist eine Zusatzantriebsanlage, welche auch bei direkt von vorn auftreffendem Fluidstrom einen Vortrieb erzeugen kann.

Das Fluid kann hierbei sowohl aus Luft, Gasen oder Flüssigkeiten bestehen. Für die Beschreibung wird ausschließlich auf den Luftstrom abgestellt; die Erfindung umfasst jedoch alle Arten von Fluidströmen (Anspruch 1,2).

Die der Erfindung zugrundeliegende Idee ist die Umlenkung des von vorn auftreffenden Fahrtfluids auf einen rotierenden Zylinder zur Erzeugung eines Vortriebs auf der Grundlage des Magnus-Effekts.

Die Verwendung umschreibt den Einfluss des von vorne in den Kanal eintretenden Fluids mit dessen Umlenkung, zur Weiterleitung auf den Magnus-Rotor, vertikal oder horizontal angeordnet (Anspruch 1, Anspruch 2).

Spezielle Ausbildungen der Form des Kanals (Anspruch 10 bis 12) und der Ausrichtung der Umlenkung (Anspruch 3 bis 7) ermöglichen Anpassungen an die Anwendung, beispielsweise bei Landfahrzeugen, die relativ schnell bewegte Fahrzeuge sind, bei denen der Fahrwind (als Fluid) von im wesentlichen vorne anströmt. Der Fahrwind selbst wird durch den regulären Antrieb (Vortrieb) des Fahrzeugs (primär) erzeugt und ermöglicht damit die Ausnutzung dieses strömenden Fluids mit und von der mit Umlenkung versehenen Zusatz-Antriebsanlage. Eine Verlagerung des rotierenden Zylinders aus der Mitte des Kanals (Anspruch 8, Anspruch 9) ermöglicht eine Verstärkung dieses Effekts.

**GB-A 371,691** (Medvedeff) beschreibt ein Flugschiff, mit einem winklig ausgebildeten Kanal, in den drei Magnus-Rotoren, die elektrisch angetrieben werden, eingesetzt sind. Diese Rotoren liegen horizontal zur Ebene des Hauptschiffs und haben zusammen eine U-Form ausgebildet, wobei nur der mittlere Rotor für den Vortrieb in Längsrichtung des Luftschiffs sorgt. Durch seitlich vorhandene Öffnungen zu einem Kanal wird von mehreren Turbinen Luft angesaugt und den genannten Rotoren zugeführt, zur Erzeugung von Vortriebskraft aus dem genannten einen Rotor und zur Erzeugung von Hubkraft hinsichtlich der beiden anderen Rotoren. Eine Zusatz-Antriebsanlage ist hier nicht beschrieben.

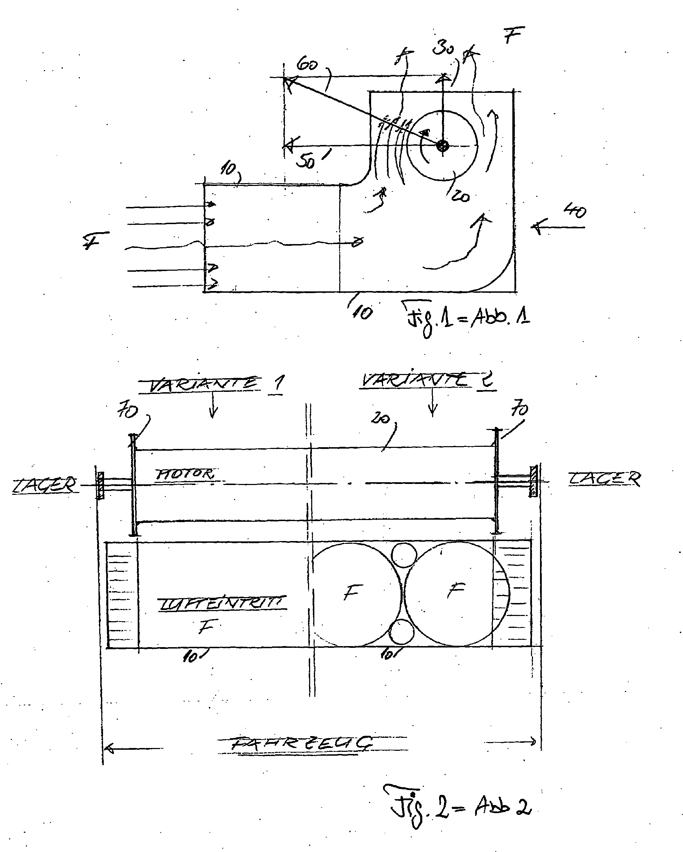

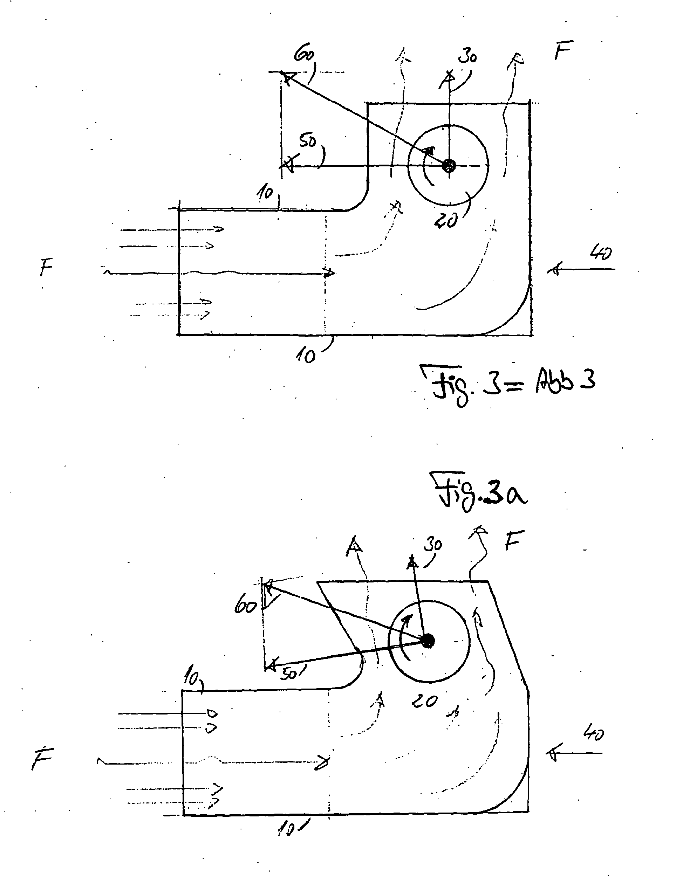

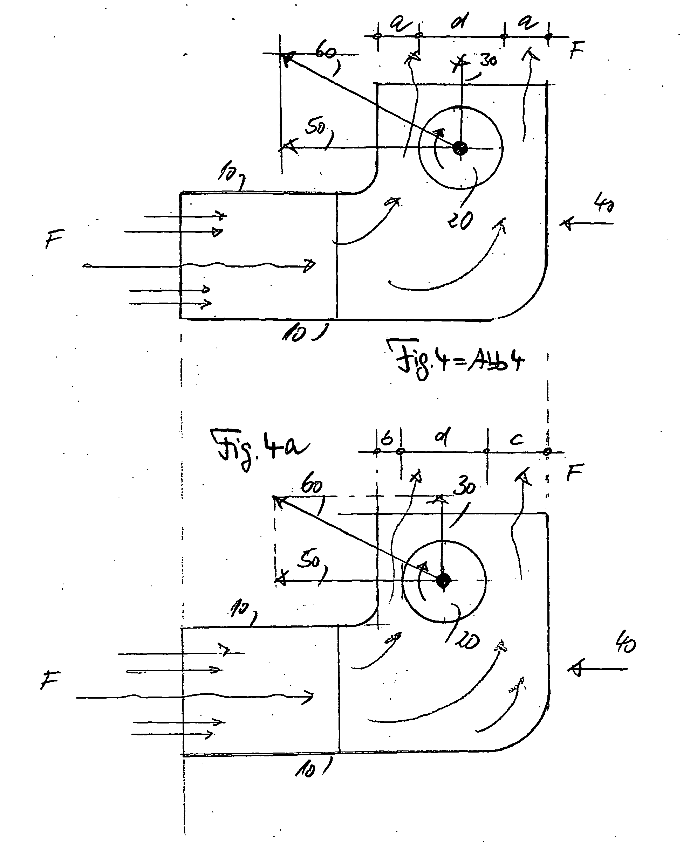

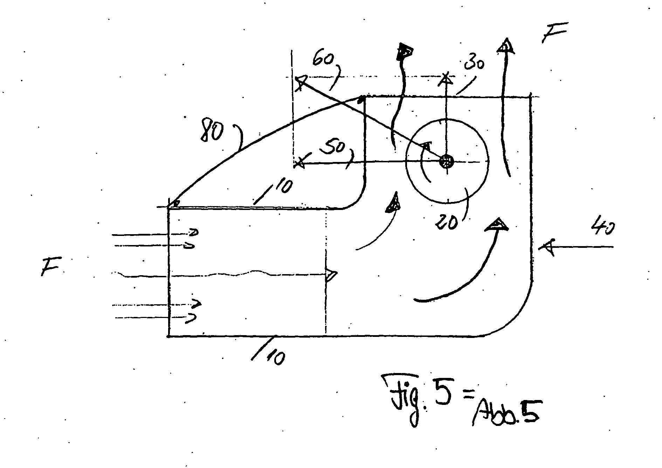

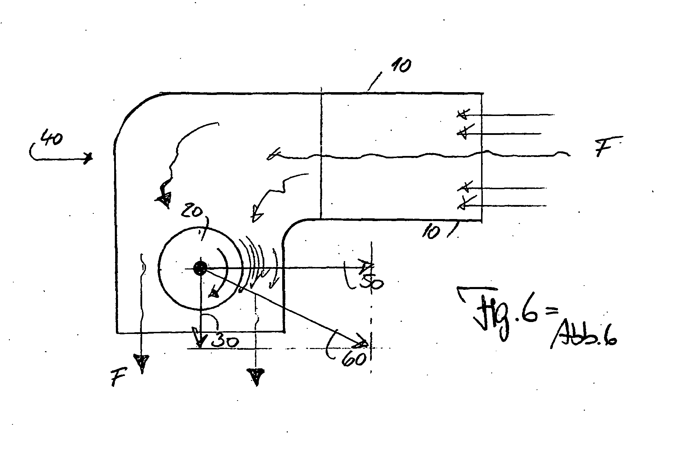

**GB-A 2 256 410** (MacDuff) zeigt ein Wasserfahrzeug nach den dortigen Figuren 4 bis 6, auch anwendbar auf eine Schwimmplattform nach der dortigen Figur 11 oder ein Unterseeboot nach der dortigen Figur 12, wobei ein Wasserstrom in einem Wasserkanal ausgenutzt wird, der durch eine Pumpe im Kanal erzeugt wird. Diese Antriebsanlage sorgt für den Vortrieb des "Marinefahrzeugs" (als zusammenfassender Begriff zu den genannten einzelnen Objekten), ist aber nicht zusätzlich zu einer vorhandenen anderen Anlage ausgebildet, sondern die alleinige Hauptantriebsanlage für den Vortrieb des Marinefahrzeugs. Aus **GB-A 494,093** (Gavrilov) sind einzelne nach dem Magnus-Prinzip arbeitende Rotoren in der dortigen Figur 1 gezeigt, welche als "fingerähnliches Elemente" beschrieben werden. Diese fingerähnlichen Elemente können an einer Vielzahl von Stellen eines Schiffes oder eines Unterseebootes angeordnet werden, vgl. dazu die dortigen Figuren 4 bis 12, welche Stellen hier nicht im einzelnen erläutert werden sollen, aber zusätzlich zu einer vermutlich vorhandenen Haupt-Antriebsanlage des Schiffes eingesetzt werden. Bei der Anordnung dieser fingerähnlichen Elemente wird aber kein Fluidstrom in einem Kanal ausgenutzt, sondern der lateral am Schiff vorbeiströmende Fluidstrom, der nicht umgelenkt wird.

Ausführungsbeispiele erläutern und ergänzen die Erfindung.
- **Figur 1**: zeigt eine mögliche Ausführungsvariante, in der der Fahrtwind F in einen Kanal 10 eintritt und nach oben abgelenkt wird.
- **Figur 2**: ist eine Ansicht von vorne auf den Lufteintritt des Kanals 10, in zwei Varianten.
- **Fig. 3, 3a**: ist eine Variante mit veränderter Umlenkung.
- **Fig. 4, 4a**: ist eine weitere Variante mit veränderter Lage des rotierenden Zylinders.
- **Figur 5**: ist eine Variante mit einem Leitblech vor dem Umlenkabschnitt.
- **Figur 6**: ist eine Variante mit einer Umlenkung des Fahrtfluids nach unten.

In **Figur 1** ist eine erste Ausführungsvariante dargestellt. Der Fahrtwind F tritt in dieser Variante in einen Kanal 10 ein und wird nach oben abgelenkt, bevor er auf den waagerecht angeordneten rotierenden Zylinder 20 trifft. Es ergeben sich die erste Widerstandskraft 30 und die zweite Widerstandskraft 40, welche auf den Kanal 10 wirken. Der durch den rotierenden Zylinder erzeugte Quertrieb 50 ist jedoch um ein mehrfaches größer, und es ergibt sich die "resultierende Kraft" 60 als Vortrieb. Diese Kraft wird auf das (nicht dargestellte) Fahrzeug übertragen (in Figur 2 unterhalb des Kanals angedeutet).

Wie in **Figur 2** gezeigt, ist der rotierende Zylinder 20 in dieser Variante quer zur Fahrtrichtung angeordnet und in einer weiteren Variante, vorzugsweise mit Endscheiben 70 ausgestattet, um die Wirkung des Magnus-Effekts weiter zu verstärken. Diese Figur zeigt in Ansicht von vorn zwei Arten des Lufteintritts.

Die Umlenkung des von vorn auftreffenden (und in den Kanal eintretenden) Luftstroms F kann in weiteren Varianten um einen von 90° abweichenden Winkel erfolgen, wie in **Figuren 3, 3a** gezeigt; hierdurch wird eine geänderte Richtung der resultierenden Kraft 60 erreicht.

Wie **Figuren 4, 4a** zeigen, kann der durch den rotierenden Zylinder 20 erzeugte Quertrieb 50 in einer weiteren Variante dadurch erhöht werden, dass dieser Zylinder nicht in der Mitte, sondern asymmetrisch im Fluidkanal 10 angeordnet wird. Die Unterschiede in den Massen b, c zeigen das, bei gleichem Durchmesser d des rotierenden Zylinders 20.

Durch diese asymmetrische Anordnung wird die Geschwindigkeit der Luft auf der in Fahrtrichtung liegenden Seite des Zylinders zusätzlich beschleunigt und der erzeugte Unterdruck zur Verursachung des Quertriebs 50 erhöht.

Wie in **Figur 5** dargestellt, kann der Fluidkanal vor seiner Umlenkung von einem Leitblech 80 abgedeckt werden, um den Luftwiderstand des Fahrtfluids zu reduzieren.

Die Umlenkung des Fahrtwindes (als Beispiel des Fluids) kann sowohl nach oben als auch nach unten erfolgen. Die Richtung der resultierenden Kraft 60 wird hierdurch, wie in **Figur 6** gezeigt, verlagert. In beiden Varianten wird jedoch ein Vortrieb erzeugt.

Eine weitere, nicht dargestellte Variante hat einen oder mehrere, senkrecht angeordnete, rotierende Zylinder 20 (wie bei dem Flettner-Rotor). Eine Umlenkung des Luftstroms erfolgt in dem Fluidkanal 10 hierbei nach seitlich, um den gewünschten Vortrieb zu erzeugen.

Der Windkanal 10 kann rechteckig, wie in Figuren 1,2 (Variante 1) dargestellt, ausgebildet sein. Der Windkanal 10 kann alternativ unterteilt sein; hierbei können diese (mehreren) Windkanäle jeweils rechteckig, elliptisch oder kreisförmig ausgebildet sein.

## Patentansprüche

1. Verwendung einer Vortriebsanlage für ein mit einer ersten Vortriebsanlage bewegtes Fahrzeug, mit einem rotierenden, waagerecht angeordneten Zylinder (20) mit Endscheiben (70), als Zusatzvortrieb, wobei ein durch die erste Vortriebsanlage erzeugter Fluidstrom (F) in einen Kanal (10) eintritt und in dem Kanal in seiner Richtung umgelenkt wird und auf den rotierenden Zylinder (20) trifft, wodurch der ergänzende Vortrieb auf der Grundlage des Magnus-Effekts in einer gewünschten Richtung erzeugt wird.

2. Verwendung einer Antriebsanlage auf der Grundlage des Magnus-Effekts mit einem rotierenden, senkrecht angeordneten Zylinder (20) mit Endscheiben, zusätzlich zu einer bestehenden Vortriebsanlage, wobei ein Fluidstrom (F) in einem Kanal (10) in seiner Richtung umgelenkt auf den rotierenden Zylinder (20) trifft und einen ergänzenden Vortrieb in einer gewünschten Richtung erzeugt.

3. Verwendung nach Anspruch 1, bei welcher diese Umlenkung nach oben erfolgt.

4. Verwendung nach Anspruch 1, bei welcher diese Umlenkung nach unten erfolgt

5. Verwendung nach Anspruch 2, bei welcher diese Umlenkung seitlich erfolgt.

6. Verwendung nach Anspruch 1 oder 2, bei welcher die Umlenkung um 90° erfolgt.

7. Verwendung nach Anspruch 1 oder 2, bei welcher die Umlenkung um einen von 90° abweichenden Winkel erfolgt.

8. Verwendung nach Anspruch 1 oder 2, bei welcher der rotierende Zylinder in der Mitte des Kanals (10) angebracht ist.

9. Verwendung nach Anspruch 1 oder 2, bei welcher der rotierende Zylinder (20) asymmetrisch im Kanal angebracht ist.

10. Verwendung nach Anspruch 1 oder 2, bei welcher der Kanal (10) durch ein Leitblech (80) zur Verringerung eines bei dem Vortrieb entstehenden Fluidwiderstandes vor dem Umlenkabschnitt abgedeckt ist.

11. Verwendung nach Anspruch 1 oder 2 mit nur einem einzigen, rechteckigen Kanal (10).

12. Verwendung nach Anspruch 1 oder 2 mit mehreren Kanälen (10), welche rechteckige, elliptische oder kreisförmige Querschnitte aufweisen.

## Claims

1. Use of a propulsion unit for a vehicle moved by a first propulsion unit, having a rotating, horizontally arranged cylinder (20) with end discs (70) as additional propulsion, wherein a fluid stream (F) produced by the first propulsion unit enters a channel (10) and is diverted in its direction in the channel and meets the rotating cylinder (20), as a result of which the supplementary propulsion is produced in a required direction on the basis of the Magnus effect.

2. Use of a drive unit on the basis of the Magnus effect having a rotating, vertically arranged cylinder (20) with end discs, additionally to an existing propulsion unit, wherein a fluid stream (F) diverts its direction in a channel (10), meets the rotating cylinder (20) and produces supplementary propulsion in a required direction.

3. Use according to claim 1, in which this diversion takes place upwards.

4. Use according to claim 1, in which this diversion takes place downwards.

5. Use according to claim 2, in which this diversion takes place laterally.

6. Use according to claim 1 or 2, in which the diversion takes place by 90°.

7. Use according to claim 1 or 2, in which the diversion takes place by an angle deviating from 90°.

8. Use according to claim 1 or 2, in which the rotating cylinder is attached in the centre of the channel (10).

9. Use according to claim 1 or 2, in which the rotating cylinder (20) is attached asymmetrically in the channel.

10. Use according to claim 1 or 2, in which the channel (10) is covered by a deflector plate (80) to reduce a fluid resistance being produced during propulsion before the diverting section.

11. Use according to claim 1 or 2 with only one single, rectangular channel (10).

12. Use according to claim 1 or 2 with several channels (10) which have rectangular, elliptical or circular cross-sections.

## Revendications

1. Utilisation d'une installation propulsive pour un véhicule mû par une première installation propulsive, présentant un cylindre rotatif (20) agencé horizontalement et muni de disques d'extrémité (70), en tant que propulsion additionnelle, sachant qu'un écoulement de fluide (F) engendré par la première installation propulsive pénètre dans un canal (10), subit une déviation directionnelle dans ledit canal et vient rencontrer le cylindre rotatif (20), de sorte que la propulsion complémentaire est développée sur le principe de l'effet Magnus, dans une direction souhaitée.

2. **Utilisation** d'une installation d'entraînement sur le principe de l'effet Magnus, avec un cylindre rotatif (20) agencé verticalement et muni de disques d'extrémité, en plus d'une installation propulsive existante, sachant qu'un écoulement de fluide (F) subit une déviation directionnelle dans un canal (10) et vient rencontrer le cylindre rotatif (20), et qu'une propulsion complémentaire est développée dans une direction souhaitée.

3. Utilisation selon la revendication 1, dans laquelle cette déviation a lieu vers le haut.

4. Utilisation selon la revendication 1, dans laquelle cette déviation a lieu vers le bas.

5. Utilisation selon la revendication 2, dans laquelle cette déviation a lieu latéralement.

6. Utilisation selon la revendication 1 ou 2, dans laquelle la déviation s'opère à 90°.

7. Utilisation selon la revendication 1 ou 2, dans laquelle la déviation s'opère suivant un angle s'écartant de 90°.

8. Utilisation selon la revendication 1 ou 2, dans laquelle le cylindre rotatif est implanté au centre du canal (10).

9. Utilisation selon la revendication 1 ou 2, dans laquelle le cylindre rotatif (20) est agencé asymétriquement dans le canal.

10. Utilisation selon la revendication 1 ou 2, dans laquelle le canal (10) est recouvert par une chicane (80) avant la zone de déviation, en vue de diminuer une résistance du fluide générée au cours de la propulsion.

11. Utilisation selon la revendication 1 ou 2, comportant un unique canal rectangulaire (10).

12. Utilisation selon la revendication 1 ou 2, comprenant plusieurs canaux (10) offrant des sections transversales rectangulaires, elliptiques ou circulaires.
